# EUROPEAN PATENT SPECIFICATION

(11) **EP 1 092 746 B1**
(45) Date of publication and mention of the grant of the patent: **15.12.2004**
(21) Application number: 00203495.7
(22) Date of filing: 09.10.2000
(51) Int. Cl.: C08J 9/12

(54) **Process for the preparation of low density flexible polyurethane foams**
Verfahren zur Herstellung von Polyurethan-Weichschaumstoffen mit niedriger Dichte
Procédé de préparation de mousses flexibles de polyuréthane de faible densité

(30) Priority: 12.10.1999 IT MI992122
(43) Date of publication of application: 18.04.2001
(73) Proprietor: Dow Global Technologies Inc., Midland, Michigan 48674 (US)
(72) Inventor: Stefani, Dario, 21100 Varese (IT); Okon Sam, Felix, 35020 Ponte San Nicolo (IT)
(74) Representative: Raynor, John

(56) References cited:
- EP-A- 0 582 328

## Description

The present invention relates to a process for the production of low density polyurethane foams.

More specifically, the present invention relates to a process for the production of low density flexible block polyurethane foams, obtained without secondary blowing agents of a chlorofluoroalkanic nature, and the foams thus obtained.

Processes are known in literature for the preparation of low density flexible polyurethane foams obtained without secondary blowing agents of a chlorofluoroalkanic nature, whose use, regulated by the Montreal protocol, is tending to disappear owing to the harmful effects these gases are known to have on the ozone layer of the stratosphere.

For example, European patent 582,328 describes a process for the preparation of flexible polyurethane foams with a density ranging from 15 to 21 Kg/m³ which comprises reacting an organic polyisocyanate with a polyol, selected from polyol polyethers or polyesters or from polyol polyethers containing ester groups or amine chain-end groups. Water is used as blowing agent, in a quantity of over 3 parts per 100 parts of polyol, mixed with dimethylcarbonate (DMC) with a weight ratio DMC/water ranging from 0.2 to 3. In particular, the examples of this patent describe the preparation of flexible expanded products with densities not lower than 17 Kg/m³.

Experimental tests, described hereunder, have shown that a blowing system based on DMC, in addition to water, is capable of producing flexible polyurethane products with excellent physical properties, but is not able to produce foams with a very low density, lower than the values specified above.

The Applicant has now found a blowing system based on DMC for polyurethane foams capable of providing products with densities lower than the limits of the known art, using blowing co-agents which, when used alone, are not capable of giving the same performance or cause drawbacks such as a very rapid and violent frothing effect, during blowing and polymerization.

An object of the present invention therefore relates to a process for the production of flexible polyurethane foams having density lower than 17 Kg/m³ which comprises reacting a polyisocyanate with a polyol component, in the presence of a blowing system essentially consisting of water, dimethylcarbonate (DMC) and an auxiliary blowing agent consisting of liquid carbon dioxide, and in which the water is present in a quantity of over 3 parts by weight per 100 parts of polyol component, the dimethylcarbonate is present in such quantities as to give a weight ratio DMC/water ranging from 0.1 to 5 and the liquid CO₂ auxiliary blowing agent is used in such quantities as to provide the desired densities.

According to the present invention, any organic polyisocyanate can be used in the preparation of the present polyurethane foams, even if aromatic or cycloaliphatic polyisocyanates and the corresponding alkyl substituted derivatives, are preferred.

In particular, low or medium molecular weight diisocyanates can be used, having general formula (I):

OCN - R - NCO (I)

wherein R represents a C₅-C₂₅ cycloaliphatic or C₆-C₁₈ aromatic radical optionally substituted with C₁-C₄ alkyl radicals such as meta and/or para-phenylenediisocyanate, 2,4-toluenediisocyanate, either alone or mixed with the 2,6-toluenediisocyanate isomer, 4,4'-diphenylmethane diisocyanate, optionally mixed with the 2,4' isomer, 4,4'-dicyclohexylmethane diisocyanate and 1-isocyanate-3-isocyanatemethyl-3,3,5-trimethylcyclohexane.

Alternatively, high molecular weight polyisocyanates can be used, with varying condensation degrees, obtained by the phosgenation of aniline-formaldehyde condensates. These products consist of mixtures of polymethylenepolyphenyl polyisocyanates having general formula (II): 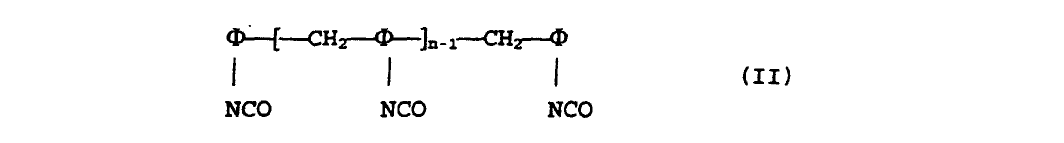 wherein Φ represents a phenyl group and n an integer greater than or equal to 1.

Preferred high molecular weight polyisocyanates according to the present invention are polymethylenepolyphenyl polyisocyanates with an average functionality ranging from 2.6 to 3.0. These products are available on the market under various trade-names such as "TEDIMON 31" (Enichem S.p.A.), "SUPRASEC DNR" (ICI) or DESMODUR 44 V20 (Bayer).

The particularly preferred polyisocyanate, however, is 2,4-toluenediisocyanate, either alone or mixed with at least 20% by weight of its 2,6 isomer.

Non-distilled or raw toluenediisocyanate or a partially purified toluenediisocyanate extracted from any plate of the distillation column, can be commonly used.

The polyol component comprises at least one polyol having a functionality ranging from 2 to 8 and an equivalent weight ranging from 50 to 2000.

These polyols can be selected from polyol polyethers, polyol polyethers containing ester groups, polyol polyethers containing amine groups and polyol polyesters.

Preferred polyols are polyol polyethers obtained by the condensation of C₂-C₆ olefinic oxides on compounds (starters) having at least two active hydrogen atoms. Preferred olefinic oxides are ethylene oxide, propylene oxide or their mixtures.

The condensation takes place on starters such as glycols, triols, tetrols, amines, alkanolamines, polyamines or their mixtures.

Representative examples of polyol polyethers which can be used according to the present invention are those terminating with propylene oxide or ethylene oxide and in which the starter is a glycol such as dipropylene glycol; a triol such as glycerin; a tetrol such as pentaerythritol; or a polyfunctional hydroxy alkane such as xylitol, arabitol, sorbitol and mannitol.

These polyols can be used as such or they can contain, in dispersion or partially grafted to the polyol chains, solid particles, preferably polymeric, with dimensions of less than 20 micrometers. Polymers suitable for the purpose are: polyacrylonitrile, polystyrene and polyvinylchloride, or their mixtures or copolymers, or urea-based polymers. These solid particles can be prepared by polymerization in situ in the polyol or they can be prepared separately and subsequently added to the polyol.

The polyol composition generally also comprises further additives commonly used in the preparation of polyurethane foams such as amine catalysts, for example, triethylenediamine, and/or metallic catalysts such as stannous octoate, cell-regulators, thermo-oxidation stabilizers and pigments. Details on the polymerization of polyurethanes and additives used are provided in the text "Saunders & Frisch - Polyurethanes, Chemistry and Technology", Interscience, New York, 1964.

In the production of polyurethane foams, object of the present invention, the quantity of water which can be used as one of the components of the blowing system, has a critical function as it is through water that there is the development of carbon dioxide which causes the expansion of the polyurethane resins. Quantities of water ranging from 3 to 6 parts by weight with respect to 100 parts of polyol component are those most commonly used.

Consequently, according to the present invention, carbon dioxide developed in situ by the chemical reaction between water and the NCO groups of polyisocyanate is preferably used as primary agent for the expansion of the polyurethane resin, and DMC and liquid CO₂ as auxiliary blowing agent, as secondary agents. The latter can be used with weight ratios DMC/CO₂ ranging from 0.5 to 5, preferably from 1 to 2.

The flexible polyurethane foams, object of the present invention, have a density lower than 17 Kg/m³, preferably between 10 and 17 Kg/m³, there are no thermo-oxidative degradation phenomena, such as scorching, and they have excellent mechanical properties such as ultimate elongation, elastic failure, compression strength, air permeability, etc. Thanks to these characteristics, the foams of the present invention can be validly used in the furniture and/or household furnishing, transport and/or car industries which require materials with the above properties.

Some illustrative but non-limiting examples are provided for a better understanding of the present invention and for its embodiment.

In the examples, the quantities of the various components of the formulations are expressed as parts by weight, unless otherwise specified.

### EXAMPLE 1 (Comparative)

100 parts of a polyol polyether based on ethylene oxide and propylene oxide, with a molecular weight of 3500 and a functionality of 3 (GLENDION FG 3504 of ENICHEM S.p.A.) were mixed with a blowing system consisting of 5 parts of water and 4 parts of DMC.

The catalytic system, consisting of an aminic catalyst (0.02 parts of NIAX A1 of Witco and 0.06 parts of DABCO 33LV of Air Products) and an organometallic catalyst (stannous octoate, 0.30 parts of DABCO T-9), and a cell-stabilizing agent (1.6 parts of TEGOSTAB BF 2370 of Goldsmith), were subsequently added.

The polyol composition thus obtained was reacted with toluene diisocyanate (TEDIMON 80 of ENICHEM S.p.A., an 80/20 mixture of 2,4 and 2,6 isomers) with an index of 108.

The foams obtained, having an excellent appearance, had the following characteristics:
density = 17.8 Kg/m³;
ultimate elongation = 110%;
75% elastic failure = 5.2%;
40% lift = 110 N;
40% compression resistance = 2.2 kPa;
air permeability = 130 Nl/min.

### EXAMPLE 2 (Comparative)

The same procedure was adopted as described in example 1, but with the following polyol formulation:

| | parts by weight |
|---|---|
| GLENDION FG 3504 | 100 |
| water | 5 |
| liquid CO₂ | 2.5 |
| NIAX A1 | 0.02 |
| DABCO 33LV | 0.06 |
| DABCO T-9 | 0.24 |
| TEGOSTAB BF 2370 | 1.6 |

The polyol composition was reacted with TEDIMON 80 with an index of 108.

The foams obtained had scorching phenomena and a strong frothing effect during the polymerization phase. The physical characteristics of the foams thus obtained were as follows:
density = 17.3 Kg/m³;
ultimate elongation = 115%;
75% elastic failure = 5.3%;
40% lift = 97 N;
40% compression resistance = 1.9 kPa;
air permeability = 110 Nl/min.

### EXAMPLE 3 (Comparative)

The same procedure was adopted as described in comparative example 2, but increasing the quantity of liquid CO₂ to 5 parts by weight. The foams obtained, having a density equal to 13.4 Kg/m³ had evident scorching phenomena and bubbles due to a strong frothing effect during the polymerization phase.

### EXAMPLE 4

The following polyol formulation was used:

| | parts by weight |
|---|---|
| GLENDION FG 3504 | 100 |
| DMC | 4 |
| water | 5 |
| liquid CO₂ | 2.5 |
| NIAX A1 | 0.02 |
| DABCO 33LV | 0.06 |
| DABCO T-9 | 0.32 |
| TEGOSTAB BF 2370 | 1.6 |

The polyol composition was reacted with TEDIMON 80 with an index of 108.

The foams obtained, having an excellent appearance, had the following physical characteristics:
density = 14.0 Kg/m³;
ultimate elongation = 103%;
75% elastic failure = 5.9%;
40% lift = 95 N;
40% compression resistance = 2.0 kPa;
air permeability = 135 Nl/min.

### EXAMPLE 5

The same procedure was adopted as described in example 4, but using as polyol polyethers a mixture of GLENDION FG 3504 (85 parts) and GLENDION PS 1504, a polyol polyether based on ethylene oxide and propylene oxide, with a molecular weight of 2750 and a functionality of 6.

The foams obtained, having an excellent appearance, had the following physical characteristics:
density = 14.3 Kg/m³;
ultimate elongation = 99%;
75% elastic failure = 6.3%;
40% lift = 127 N;
40% compression resistance = 2.8 kPa;
air permeability = 93 Nl/min.

### EXAMPLE 6

The same procedure was adopted as described in example 5, but increasing the quantity of liquid CO₂ to 4 parts by weight. The foams obtained, having an excellent appearance, had the following physical characteristics:
density = 12.2 Kg/m³;
ultimate elongation = 101%;
75% elastic failure = 6.7%;
40% lift = 115 N;
40% compression resistance = 2.3 kPa;
air permeability = 90 Nl/min.

## Claims

1. A process for the production of flexible polyurethane foams having density lower than 17 Kg/m³ which comprises reacting a polyisocyanate with a polyol component, in the presence of a blowing system essentially consisting of water, dimethylcarbonate (DMC) and an auxiliary blowing agent consisting of liquid carbon dioxide, and in which the water is present in a quantity of over 3 parts by weight per 100 parts of polyol component, the dimethylcarbonate is present in such quantities as to give a weight ratio DMC/water ranging from 0.1 to 5 and the liquid CO₂ auxiliary blowing agent is used in such quantities as to provide the desired densities.

2. The process according to claim 1, wherein the polyisocyanate is selected from those having general formula (I) :
OCN - R - NCO (I)
wherein R represents a C₅-C₂₅ cycloaliphatic or C₆-C₁₈ aromatic radical, optionally substituted with C₁-C₄ alkyl radicals.

3. The process according to claim 1, wherein the organic polyisocyanate is selected from those having a high molecular weight, with varying condensation degrees, obtained by the phosgenation of aniline-formaldehyde condensates, having general formula (II): 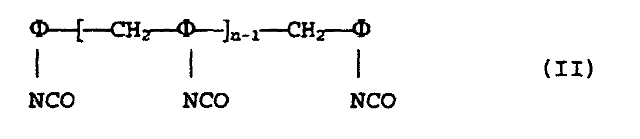 wherein Φ represents a phenyl group and n an integer greater than or equal to 1.

4. The process according to claim 1 or 2, wherein the polyisocyanate is 2,4-toluenediisocyanate either alone or mixed with at least 20% by weight of its 2,6 isomer.

5. The process according to any of the previous claims, wherein the polyol component comprises at least one polyol having a functionality ranging from 2 to 8 and an equivalent weight ranging from 50 to 2000.

6. The process according to any of the previous claims, wherein the quantity of water ranges from 3 to 6 parts by weight with respect to 100 parts of polyol component.

7. The process according to any of the previous claims, wherein the DMC and liquid CO₂ auxiliary blowing agent are used with weight ratios DMC/CO₂ ranging from 0.5 to 5.

8. Flexible polyurethane foams having a density lower than 17 Kg/m³, preferably between 10 and 17 Kg/m³, without thermo-oxidative degradation phenomena, such as scorching, obtained with the process according to any of the previous claims.

9. Use of the polyurethane foams according to claim 8 in the furniture and/or household furnishing and transport and/or car industries.

## Patentansprüche

1. Verfahren zur Herstellung von flexiblen Polyurethanschäumen, die eine Dichte von weniger als 17 kg/m³ aufweisen, das umfasst
die Umsetzung eines Polyisocyanats mit einer Polyol-Komponente in Gegenwart eines Treibmittelsystems, das im Wesentlichen besteht aus Wasser, Dimethylcarbonat (DMC) und einem Hilfstreibmittel, das aus flüssigem Kohlendioxid besteht, wobei in dem Treibmittelsystem das Wasser in einer Menge von mehr als 3 Gew.-Teilen auf 100 Gew.-Teile der Polyol-Komponente vorliegt, das Dimethylcarbonat in solchen Mengen vorliegt, dass ein Gewichtsverhältnis von DMC zu Wasser in dem Bereich von 0,1 bis 5 erhalten wird, und das flüssige CO₂-Hitfstreibmittel in solchen Mengen verwendet wird, dass die gewünschten Dichten erzielt werden.

2. Verfahren nach Anspruch 1, worin das Polyisocyanat ausgewählt wird aus solchen der allgemeinen Formel (1):
OCN - R - NCO (I)
worin R steht für einen cycloaliphatischen C₅-C₂₅-Rest oder einen aromatischen C₆-C₁₈-Rest, der gegebenenfalls substituiert ist durch C₁-C₄-Alkyl-Reste.

3. Verfahren nach Anspruch 1, worin das organische Polyisocyanat aus solchen ausgewählt wird, die ein hohes Molekulargewicht aufweisen, mit variierenden Kondensationsgraden, hergestellt durch Phosgenierung von Anilin-Formaldehyd-Kondensaten, weiche die allgemeine Formel (II) haben: 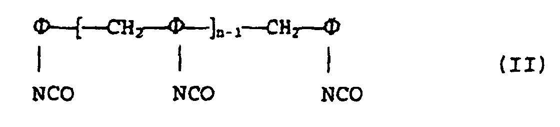 worin Φ für eine Phenylgruppe und n für eine ganze Zahl von ≥ 1 stehen.

4. Verfahren nach Anspruch oder 2, worin das Polyisocyanat 2,4-Toluoldiisocyanat entweder allein oder im Gemisch mit mindestens 20 Gew.-% seines 2,6-Isomers ist.

5. Verfahren nach einem der vorhergehenden Ansprüche, worin die Polyol-Komponente mindestens ein Polyol mit einer Funktionalität in dem Bereich von 2 bis 8 und einem Äquivalentgewicht in dem Bereich von 50 bis 2000 umfasst.

6. Verfahren nach einem der vorhergehenden Ansprüche, worin die Menge des Wassers in dem Bereich von 3 bis 6 Gew.-Teilen, bezogen auf 100 Gew.-Teile der Polyol-Komponente, liegt.

7. Verfahren nach einem der vorhergehenden Ansprüche, worin das DMC und das flüssige CO₂-Hilfstreibmittel in DMC/CO₂-Gewichtsverhältnissen verwendet werden, die in dem Bereich von 0,5 bis 5 liegen.

8. Flexible Polyurethanschäume, die eine Dichte von weniger als 17 kg/m³, vorzugsweise eine Dichte zwischen 10 und 17 kg/m³, aufweisen und frei von thermisch-oxidativen Abbauphänomenen, wie z.B. einem Scorching (Verschmoren), sind, die nach dem Verfahren nach einem der vorhergehenden Ansprüche hergestellt sind.

9. Verwendung der Polyurethanschäume nach Anspruch 8 in der Möbel- und/oder Haushaltseinrichtungs- und Transport- und/oder Fahrzeugindustrie.

## Revendications

1. Procédé pour la production de mousses de polyuréthanne flexibles présentant une masse volumique inférieure à 17 kg/m³, qui comprend les étapes consistant à faire réagir un polyisocyanate avec un composant polyol en présence d'un système d'expansion constitué essentiellement d'eau, de carbonate de diméthyle (CDM) et d'un agent d'expansion auxiliaire constitué de dioxyde de carbone liquide, et dans lequel l'eau est présente en une quantité supérieure à 3 parties en poids pour 100 parties de composant polyol, le carbonate de diméthyle est présent en des quantités permettant d'obtenir un rapport en poids CDM/eau dans la plage de 0,1 à 5 et l'agent d'expansion auxiliaire CO₂ liquide est utilisé en des quantités permettant d'obtenir les masses volumiques souhaitées.

2. Procédé selon la revendication 1, dans lequel le polyisocyanate est choisi parmi ceux répondant à la formule générale (I) :
OCN - R - NCO (I)
dans laquelle R représente un radical cycloaliphatique en C₅-C₂₅, ou aromatique en C₆-C₁₈, éventuellement substitué par des radicaux alkyle en C₁-C₄.

3. Procédé selon la revendication 1, dans lequel le polyisocyanate organique est choisi parmi ceux présentant une masse moléculaire élevée, avec des degrés de condensation variables, obtenus par la phosgénation de condensats aniline - formaldéhyde, répondant à la formule générale (II) 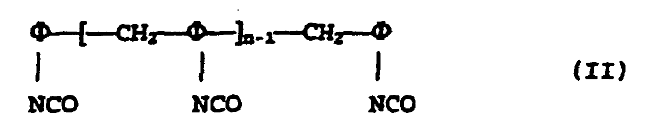 dans laquelle Φ représente un groupe phényle et n représente un nombre entier supérieur ou égal à 1.

4. Procédé selon la revendication 1 ou 2, dans lequel le polyisocyanate est le 2,4-toluène diisocyanate soit seul soit mélangé avec au moins 20 % en poids de son isomère 2,6.

5. Procédé selon l'une quelconque des revendications précédentes, dans lequel le composant polyol comprend au moins un polyol ayant une fonctionnalité variant de 2 à 8 et un poids équivalent variant de 50 à 2000.

6. Procédé selon l'une quelconque des revendications précédentes, dans lequel la quantité d'eau varie de 3 à 6 parties en poids pour 100 parties de composant polyol.

7. Procédé selon l'une quelconque des revendications précédentes, dans lequel le CDM et l'agent d'expansion auxiliaire CO₂ liquide sont utilisés avec des rapports en poids CDM/CO₂ variant de 0,5 à 5.

8. Mousses de polyuréthanne flexibles ayant une masse volumique inférieure à 17 kg/m³, de préférence entre 10 et 17 kg/m³, sans phénomène de dégradation thermo-oxydative tels qu'une brûlure, obtenues avec le procédé selon l'une quelconque des revendications précédentes.

9. Utilisation des mousses de polyuréthanne selon la revendication 8 dans les industries du meuble et/ou de l'ameublement domestique, du transport et/ou de l'automobile.
